# EUROPEAN PATENT APPLICATION

(11) **EP 0 840 277 A2**
(43) Date of publication of application: **06.05.1998**
(21) Application number: 97119126.7
(22) Date of filing: 03.11.1997
(51) Int. Cl.: G09G 5/14

(54) **Window processing in an on screen display system**

(30) Priority: 01.11.1996 US 30105 P
(71) Applicant: TEXAS INSTRUMENTS INCORPORATED, Dallas, Texas 75243 (US)
(72) Inventor: Chauvel, Gerard, 06600 Antibes (FR)
(74) Representative: Holt, Michael

(57) **Abstract**

An On Screen Display (OSD) system for a digital television set-top box is provided. The OSD can simultaneously display different kinds of pictures, (e.g., a bit-map, a graphic, a still video picture, a motion video picture or a background color). Each picture is in a different window that is managed by hardware. An OSD controller changes the display mode in real time during generation of the display. The OSD controller calculates, in real time for each line, the address and the size of each segment of a window that makes up the current line. A display memory is organized by window and located in an SDRAM; the same memory space is used for both the display's frame memory and the CPU's working area. The controller reads the segments from the memory space that contain the full windows created by the CPU. The controller reads the windows, segment by segment, and transfers data to an OSD FIFO during display, overlapped parts not visible are not read. For each pixel, the OSD decoder reads into the FIFO the bits required to display the current pixel. The number of bits per pixel varies during the display depending of the mode. An address calculator, a pixel selector and a controller select the bits of data from the FIFO to form the current pixel.

## Description

### FIELD OF THE INVENTION

This invention relates to an on screen display system with real time window address calculation.

### BACKGROUND OF THE INVENTION

Current OSD systems employ a memory for a frame buffer that stores the actual display to be generated for a television screen or other display. The CPU associated with these current systems have a separate working memory space. When an OSD window is desired, the CPU first generates the window in the working memory space and then adds the window to the frame memory in the desired location during a refresh or blanking period. These systems require multiple memory spaces and may be expensive.

Display flow, display modes and techniques for On-Screen Display (OSD) and memory requirements for an OSD coprocessor that overcome the shortcomings of existing OSD systems are described herein.

### SUMMARY OF THE INVENTION

The present invention provides an On-Screen Display (OSD) system for a digital television set-top box. The OSD system of the present invention can simultaneously display several different kindS of pictures, (e.g. a bit-map, a graphic, a still video picture, a motion video picture or a background color). Each picture is displayed in a different window that is managed by special OSD hardware of the present invention. The OSD controller of the hardware changes the display mode in real time during generation of the display. In this manner, a bit-map window with 2 colors can be followed by a still video picture that requires 12-bits per pixel for color.

The OSD controller of the hardware calculates, in real time for each line, the address and the size of each segment of a window that makes up the current line. The display memory is organized by window and located in an associated SDRAM; the same memory space is used for both the display frame memory and the CPU working memory area. The controller reads the segments from the memory space that contains the full windows created by the CPU. The controller reads the windows, segment by segment, and transfers data to an OSD FIFO during display generation. When several windows are overlapped, those parts not visible are not read.

For each pixel, an OSD decoder reads into the FIFO the bits required to display the current pixel. The number of bits per pixel may vary during the display generation depending on the mode. An address calculator, a pixel selector and its controller select the bits of data from the FIFO to form the current pixel.

### BRIEF DESCRIPTION OF THE DRAWINGS

The present will now be further described by way of example, with reference to the accompanying drawings in which:
Figure 1 depicts a high level architectural diagram of an OSD system of the present invention;
Figure 2 depicts in more detail some of the connections and blocks depicted in Figure 1;
Figure 3 depicts two windows having different color schemes that illustrate how the OSD system of the present invention displays windows;
Figure 4 depicts how the segments of a line in Figure 3 are generated, assembled and stored in accordance with teachings of the present invention;
Figure 5 depicts in more detail portions of the blocks depicted in Figure 2;
Figure 6 depicts the FIFO management flow for transfers from the CPU memory;
Figure 7 depicts the two cases for starting a new segment or pixel clock;
Figure 8 depicts a portion of the window controller of the present invention;
Figure 9 depicts four overlapped windows; and
Figure 10 depicts the OSD flow of the present invention.

### DETAILED DESCRIPTION

### Display flow with real time address calculation

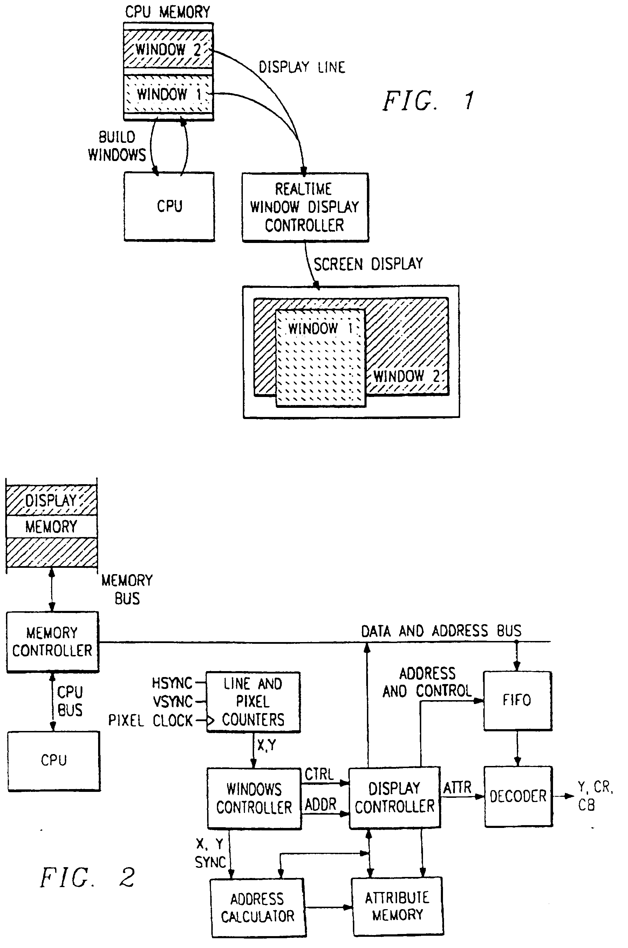

Most display systems use frame mode for OSD, and the CPU working space and display memory are separate. With hardware windowing mode (Figure 1) there is no duplication as memory space is same for the CPU and the OSD. Hardware windowing mode reduces memory transfer, power dissipation and system cost.

The CPU builds each windows separately in different space of the SDRAM. Each window has its own display attributes i.e. display mode, resolution, position, and the number of bits to display a pixel of windows 1 and 2 can be different. The picture is composed directly by the hardware that reads the content of the windows in the CPU memory space. The display controller hardware reads only the data required to compose the current frame.

The OSD display controller sequentially reads each segment of windows 1 and 2 line by line from the left upper corner to the right lower corner. For each new line the OSD controller calculates the start address and block size of each segment of windows that compose the line. During display the OSD controller transfers the contents of the windows from the CPU memory segment by segment and changes the attributes of display for each transition of window.

### OSD block diagram (Figure 2)

The OSD and the CPU communicate to the display memory (SDRAM) via the memory controller. The OSD memory addresses are generated by the display controller. The FIFO receives each segment of windows to be displayed. The OSD coprocessor is composed of the following blocks:

Line counter: The pixel counter is incremented by the pixel clock and line counter when the pixel counter is at the end of the line. It generates X, Y, that represent the pixel position on the screen and synchronization signals Hsyn and Vsync to control screen display.

Windows Controller: It contains the positions X and Y of each windows to be displayed on the current screen. The controller compares X, Y to the position of the windows and indicates to the display controller each window transition and the window number.

Address Calculator: For each new line it calculates the start address and block size of each segment of the windows and pushes the values into a stack in the attribute memory.

Display controller: Each new window transitions the display controller to read the new attribute from the attribute memory. The controller manages the FIFO. For each new line the FIFO is loaded block by block with the segments of windows that compose the line. When the FIFO is full the controller waits for the next access.

Decoder: For each pixel the decoder extracts from the FIFO the number of bits corresponding to the current pixel to be displayed. It transforms data bit in pixel.

### Windows attributes:

Display modes: empty window for decimated video. Bitmap, YCrCb 4:4:4 graphics component, YCrCb 4:2:2 CCIR 601 component and background color.

Supports blending of bitmap, YCrCb 4:4:4, or YCrCb 4:2:2 with motion video and with an empty window.

Supports window mode and color mode blending.

Provides a programmable 256 entries Color Look Up table.

Outputs motion video or mixture with OSD in a programmable 422 or 444 digital component format.

Provides motion video or mixture with OSD to the on-chip NTSC/PAL encoder.

Each hardware window has the following attributes:
window position: any even pixel horizontal position on screen; windows with decimated video have to start from an even numbered video line also
window size: from 2 to 720 pixel wide (even values only) and 1 to 576 lines;
window base address;
data format: bitmap, YCrCb 4:4:4, YCrCb 4:2:2, and empty;
bitmap resolution: 1, 2, 4, and 8 bits per pixel;
full or half resolution for bitmap and YCrCb 4:4:4 windows;
bitmap color palette base address;
blend enable flag;
4 or 16 levels of blending;
transparency enable flag for YCrCb 4:4:4 and YCrCb 4:2:2; and
output channel control.

### Example of OSD display with 2 windows

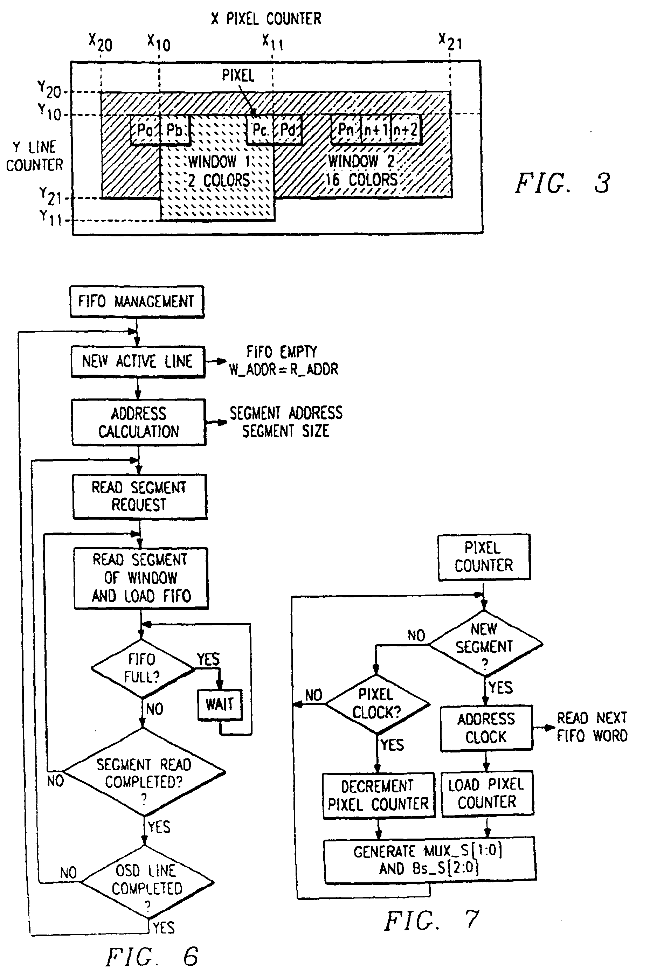

The Figure 3 shows an example of display with two overlapped windows. The window 2, on back is a bit map with 16 colors per pixel, a pixel require 4-bits into the frame memory to define the code of the color. The window 1 on top is a bit map with 2 colors per pixel, a pixel require 1-bit in the frame memory.

The position and dimension of the windows 1 is given by the attributes X_10, X_11, Y_10, Y_11. Horizontally the number of pixel is: X_11 - X_10. Vertically the number of lines is: Y_11 - Y_10. Same for window 2 with X_20, X_21, Y_20 and Y_21.

The line Y10 contains 3 segments. The first segment at the beginning of window 2, starts in position X20 and ends in Pa. The segment 2, window 1, is displayed on top of window 2, starts in X10 and end in Pc. The third segment is the end of the window 2, start in Pd and end in X21. Segments 1 and 3 come from the memory space of window 2 and segment 2 from the memory space of window 1. The contents of the window 2 memory between Pa and Pb are ignored and not transferred to the FIFO.

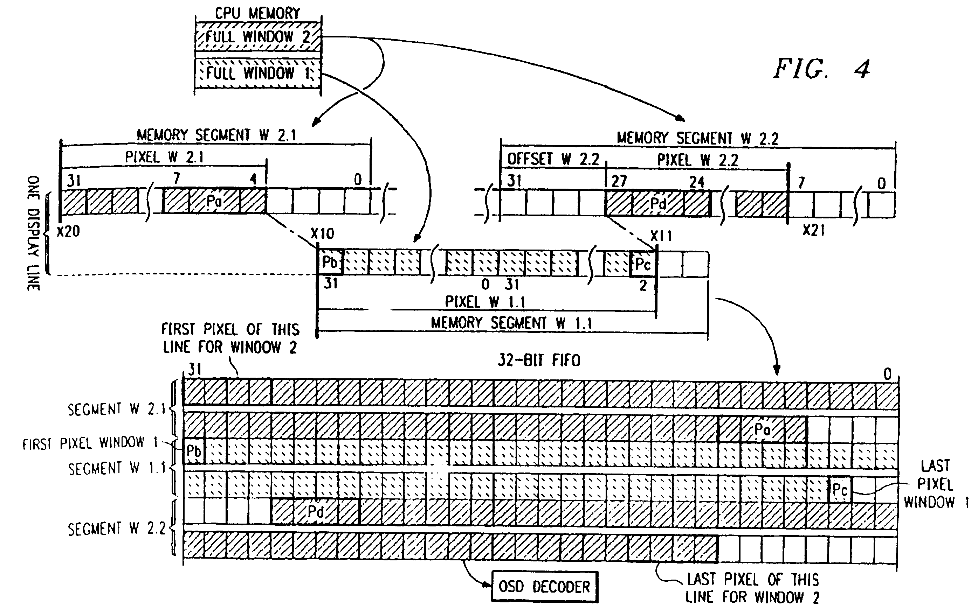

The Figure 4 details the detail of process for this line and the flow from the memory to the FIFO. The CPU has composed two windows in separate memory space. The windows are describe line by line, each new line start with a new 32-bit word. The first pixel of a line is aligned in the msb of the word. If the number of bits to describe the content of the line is not modulo 32, some bits of the word can be ignored. The window 2 has 4-bit per pixel, the first segment W2.1 contain 2 words but only 15 pixel. The last 4-bits are not used for display. The second segment W1.1 has 2 words, the window 1 has 1-bit per pixel and 62 pixel horizontally. The last 2-bits of the second word are ignored. The third segment W2.2 is not a beginning of a new line, the pixel Pc is not necessary aligned at the word boundary, in this example Pc is the second pixel of the first word of this segment, this position is referred by the segment offset W2.2.

### Display controller and decoder

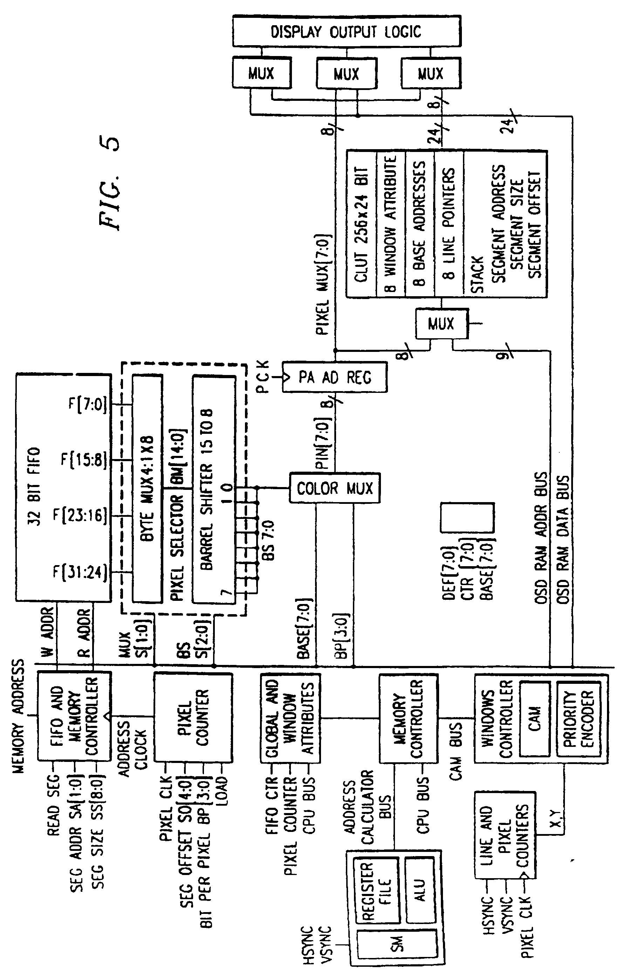

Figure 5 shows different blocks of OSD coprocessor described previously. This chapter describe the detail of each blocks of the window controller, display controller and decoder.

### FIFO and memory controller

The FIFO is a 32-bits dual port memory. The data is received from the main memory SDRAM and used by the Pixel selector. The transfer requests and addresses generation are controlled by the FIFO memory controller: it generate write and read addresses and control signals to the FIFO and the memory address and control to the traffic controller that access the SDRAM. The OSD data is read by segment of window in burst. Each new segment the controller access to the attributes RAM to get memory address and segment size.

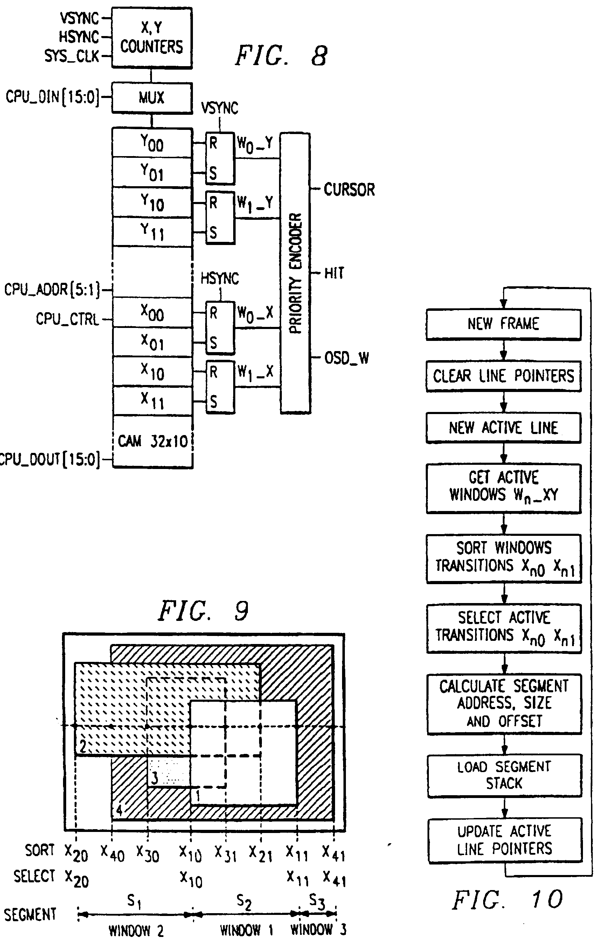

Figure 6 shows the FIFO management flow for the transfers from the SDRAM.

At the beginning of each new active line, the FIFO is empty the Read and Write pointer are equal.

The address calculator calculate the start address of each segment of the windows that compose the current line and store into the Attribute RAM.

The FIFO controller generate the Read segment request to the OSD Memory controller in order to read the first segment address Sa[23:0] and segment size Ss[8:0] stored previously into the attribute RAM.

If the segment is larger than the size of the FIFO the controller split the segment by burst. When the FIFO is full or cannot contain the block the FIFO controller is waiting.

When the full segment of window has been read the FIFO controller generate a request to access the next segment composing the current line. The pixel selector read the data word by word F[31:0]. The number of bit per pixel or pixel per word can vary for each segment of window so the time between two access to the FIFO is variable. A new segment start always with a new word. As shown Figures 3 and 4 window 1 overlaps window 2, Pa is the last pixel of window 2 for this segment. In this case a part of the word of the first segment of window 2 will not be used by the pixel selector to generate a pixel. Address clock signal is generated to access a new word into the FIFO.

### Pixel counter

There are two different cases (Figure 7): a new segment start or new pixel clock. When a new segment of window starts the pixel counter logic generate the address clock signal to the FIFO controller in order to transfer the first word of this segment to the pixel selector.

The window controller generate the "Load" signal to indicate a window transition. The "Load" transfer the "Segment offset So[4:0] corresponding to this new segment of window to the pixel counter.

There are two situations represented in Figure 4:
The segment W2.1 is the left border of the window, So[4:0]=0. Window 2 has 4-bit per pixel, the value of the pixel counter that generate Mux_S[1:0] concatenated with Bs_S[2:0] will be ( So[4:0] - Bp[3:0] ) = 28 to point to the first pixel of this word.
The segment W2.2 is overlapped partly with window 1. The first pixel of the first word is not displayed. So[4:0] = ( 0 - Bp[3:0] ) = 28. The pixel counter will be So[4:0] - Bp[3:0] = 24 to point to the second pixel of this word.

The "Pixel clock" decrements the Pixel counter by 0, 1, 2, 4 or 8 depending of the number of bit per pixel Bp[3:0] of the current window. Address clock is generated when the Pixel counter is equal to zero.

### Pixel selector

The pixel selector receive the 32-bit data word from the FIFO outputs F[31:0]. It contain two parts, a byte multiplexor and a barrel shifter. The byte multiplexor selects one of the four bytes F[31:24], F23:16], F[15:8] or F[7:0] in function of Mux_S[1:0] as shown table 1a. The barrel shifter shift right the byte by 0 to 7 bit position as shown Table 1b.

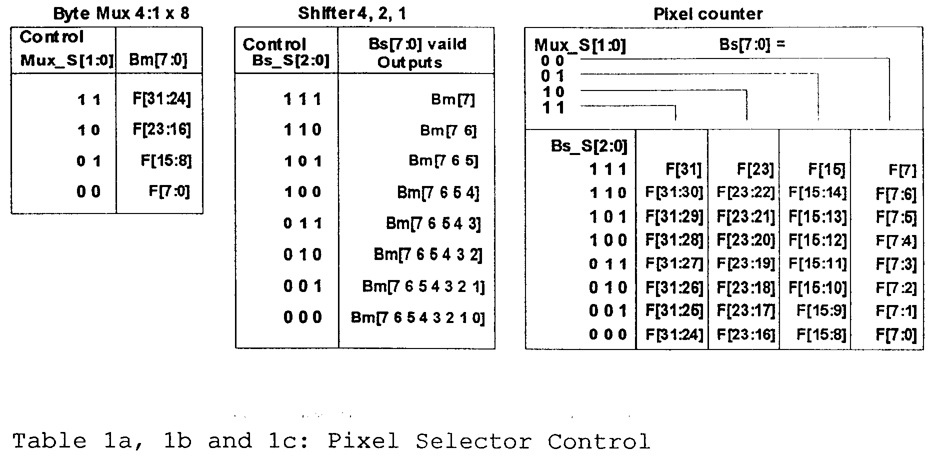

The 5-bit pixel counter generates Mux_S[1:0]&Bs_S[2:], the table 1c indicate the value of Bs[7:0] in function of the pixel counter value. This table combine 1a and 1b.

### Multiplexer

The color multiplexer receive data Bs[7:0] from the barrel shifter and Base[7:0] from the attribute register. It is controlled by number of bit per pixel Bp[3:0], coming from the attribute register. According to the table 1d the multiplexer select 0, 1, 2, 4 or 8 bits of the Base address color Base[7:0] and its complement in Bs[7:0] in order to form the outputs Pm[7:0].

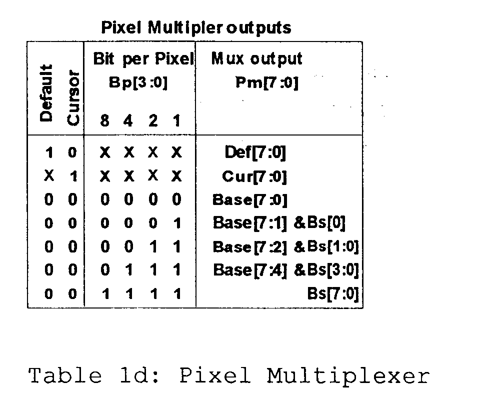

When the cursor is detected by the window controller Base[7:0] is equal to the cursor color. When the display does not contain any OSD window or motion video, the default color is selected. During OSD window the Base[7:0] comes from the current window attribute register.

The output of the multiplexor generate Pixel_Mux[7:0] used in bit-map mode to select one of the 256 colors of the CLUT. In graphic mode or still video picture Pixel_Mux[7:0] is one color component Luma or Chroma. Graphic mode requires tree color components per pixel, the Pixel_clock is 3 times faster than in bit-map. In still video picture 2 color component are required during one pixel duration. The display output is tree 8-bits words, Y, Cr and Cb.

### Global and window attribute registers

The global attribute register contain cursor and default color, these values are set by the CPU. The window attribute register contain the attribute for the current window:
· Display mode: bit-map, graphic, still video or empty.
· Number of bit per pixel or color component: 0, 1, 2, 4 or 8 bits.
· The bit-map CLUT base address.
· Blending 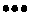 .

The attributes are located into the Attribute RAM. The window attributes change every window transition. The segment attribute are sent through this block to the FIFO controller or pixel counter.

### Window controller

The window controller (Figure 8) contains a content addressable memory CAM, flip flop and priority encoder. The CAM contain the attributes of position and size of the windows to be displayed on the current frame. Each window require 4 words to indicate horizontally the coordinates of the first and last pixel and vertically the coordinates of the first and last line. A 32_words CAM support 8 windows.

The CAM compare the value of the pixel and line counters respectively X and Y. When Y counter match a value Yn0, a new window start vertically, the corresponding RS flip-flop is set Wn_Y=1. When Y counter match a value Yn1, the corresponding window end vertically, the RS flip-flop Wn_Y is reset. The process is the same horizontally. Wn_Y and Wn_X are combined to indicate that the X, Y counter crosses an active window. The indices "n" indicate the window number. Several windows can be overlapped, the priority encoder define the display order on the screen. The indices "n=0" correspond to the cursor always on top. Outputs of priority encoder are HIT and OSD_W, HIT generates the attribute clock and OSD_W select the memory attribute address corresponding to the active window. The HIT generate the access request to the attribute RAM at the address given by the priority encoder. The attributes are transferred to the window attribute register.

The CAM can be accessed by the CPU to set the position of the windows during initialization. The address calculator access the CAM each line for real time address calculation.

### Pseudo code for the window controller

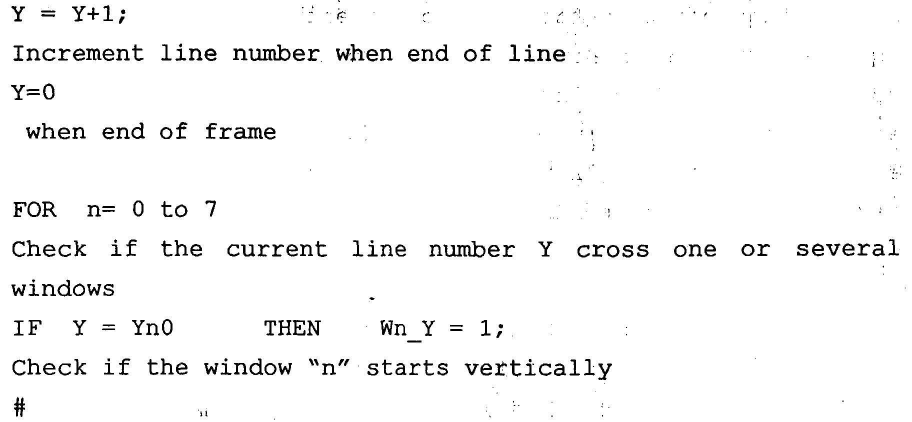

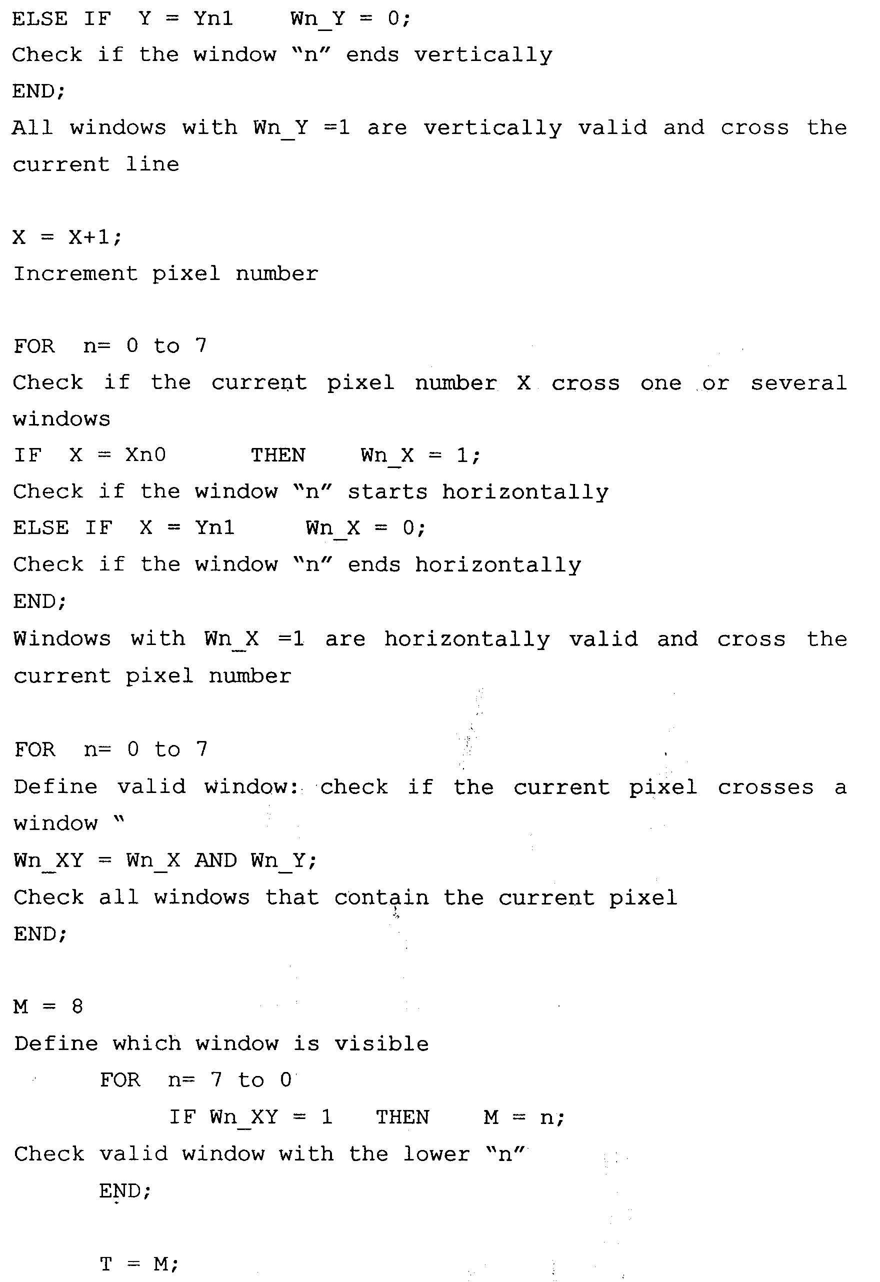

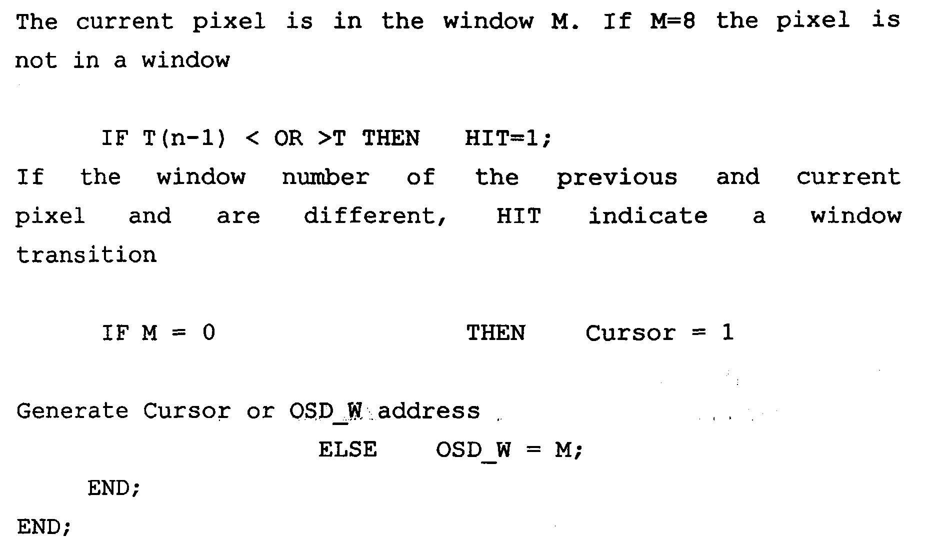

### Memory controller

The memory controller manage the access to the Attribute RAM and CAM. The access are:

CPU access:
CAM: The CPU program position and priority of the windows. This access is done during vertical blanking or when before OSD display.
Attribute RAM: to load the CLUT, windows attributes and Base address.

Address calculator access: During horizontal blanking to the CAM and Attribute RAM to calculate the segment address, size and offset.

FIFO controller access: When read segment request is generated, to the Attribute RAM to read the next segment address and size for data transfer between SDRAM and FIFO.

Window controller access: Each window transition to the Attribute RAM to read window attribute and segment offset.

### Address calculator

The address calculator is the key element of hardware windowing system. It calculates the attributes of each segment making up the current display line: first address, size in word and offset of the first pixel and store the values in the segments stack. The address calculator (AC) receive vertical and horizontal synchronization signals that indicate the beginning of a new frame or a line.

Each new frame the AC transfers the base address Ba0 to Ba7 to the corresponding line pointers "L0" to L7. The line pointers are located in the Attribute RAM. Ba(n) is the base address of the window in the SDRAM.

The example Figure 9 shows 4 overlapped windows, the line Y cross horizontally all windows start and end. Each line during the active display area the AC get the active windows for the current line, the window controller return an 8-bit value. The "1" represent the active, first bit is window 0 and last bit window 7: W0_XY 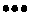 . W7_XY = 0,1,1,1,1,0,0,0

For each active windows the (Wn_XY=1) the AC read the content Xn0 and Xn1 of the CAM, and sort windows indices in the order of transitions from the left to the right. For the given example the sorted values are: X20, X40, X30, X10, X31, X21, X11, X41 (X20, is the lower value X41 the bigger)

From the left to the right when a window start the AC selects in that window the values with lower indices. For example the first window start in X20, the first selection is done by selecting only the values < X20 between X20, and X21, the values X40, X30, X31 are eliminated, X10 is maitained. The next window start is X10 there are no values between X10 and X11. There is no more window start after X11, X41 is valid. The selected active transition are: X20, X10, X11, X41.

This line has 3 segments: S1 between X20 and X10; S2 between X10 and X11and S3 between X11 and X41. S1 is window 2, S2 is window 1 and S3 window 4. The AC calculate the segment address. For each window start the segment address Sa[23:0] is equal to the line pointer Ln.

### Example:

S1: Sa[23:0] = L2;
S2: Sa[23:0] = L1;

The last segment (S3) is the end of window 4. S3 starts in (X11) the AC calculate the number pixels and entire words from the beginning of window 4 to (X11). The number of pixel is (X11 - X40). The number of words is (X11 - X40)*K4/32, K4 is the number of bit per pixel for the window 4 and 32 the number of bits per words. This value added to the line pointer (L4) give the segment address S3: Sa[23:0].

The block size is the entire number of words between 2 transitions. The offset that points the first pixel is the remainder.
S1: (X10 - X20)*K2 / 32 => Ss[8:0] and So[4:0]
S2: (X11 - X10)*K1 / 32 => Ss[8:0] and So[4:0]
S3: (X41 - X11)*K4 / 32 => Ss[8:0] and So[4:0]

The entire part of the equation give the number of words Ss[8:0]. The decimal part the offset So[4:0]. If So[4:0] > 0 the number of words is Ss[8:0]+1.

The last step the line pointer is incremented by the number of entire words to describe a line of the active windows.

L1 = L1 + (X11 - X10)*K1 / 32 + 1
if the number of bits divided by 32 is > 0

L2 = L2 + (X21 - X20)*K2 / 32 + 1
if the number of bits divided by 32 is > 0

L3 = L3 + (X31 - X30)*K3 / 32 + 1
if the number of bits divided by 32 is > 0

L4 = L4 + (X41 - X40)*K4 / 32 + 1
if the number of bits divided by 32 is > 0

OSD system simultaneously displays different kinds of pictures: bit-map, graphic, still video picture, motion video picture or background color. Each picture is in a different window that is managed by hardware.

A display memory organized by windows is located in an SDRAM; the same memory space in the SDRAM is used for both the display frame memory and for the CPU working area.

An address calculator calculates the attributes of each of the segments that make up the current display line (first address, size in word and offset of the first pixel) and stores these values in the segments stack.

The OSD data is read in a burst by window segment. For each new segment, the controller accesses the attributes RAM to get a memory address and segment size.

## Claims

1. An on-screen display system, comprising:
a central processing unit;
a memory connected to said central processing unit;
a hardware window display controller connected to said memory; and
a display connected to said controller.

2. An on-screen display co-processor, comprising:
a FIFO;
a decoder;
a display controller interconnected with said FIFO and decoder;
an attribute memory interconnected with said controller;
a windows controller interconnected with said controller;
line and pixel counters interconnected with said windows controller; and
an address calculator interconnected with said windows controller, controller and attribute memory.
